Europäisches Patentamt

European Patent Office

Office européen des brevets

(11) Numéro de publication: **0 230 805**
**A1**

## (12) DEMANDE DE BREVET EUROPEEN

(21) Numéro de dépôt: 86402665.3

(22) Date de dépôt: 02.12.86

(51) Int. Cl.4: **A23L 1/04** , A23L 1/317

(30) Priorité: 02.12.85 FR 8517804

(43) Date de publication de la demande:
05.08.87 Bulletin 87/32

(84) Etats contractants désignés:
AT BE CH DE ES FR GB GR IT LI LU NL SE

(71) Demandeur: GEL'DOR Société anonyme
Domaine des Terriers Chemin Lebon
F-06600 Antibes(FR)

(72) Inventeur: Constantin, Gérard
Route de Plascassier les Hauts de Sartoux
F-06370 Mouans Sartoux(FR)
Inventeur: Constantin, Rémi
Les Soucaous chemin des Bastions
F-06370 Mouans Sartoux(FR)

(74) Mandataire: Gillard, Marie-Louise et al
Cabinet Beau de Loménie 55, Rue
d'Amsterdam
F-75008 Paris(FR)

(54) **Composition alimentaire pulvérulente à base de gélatine, de gélifiants et d'un sel de qualité alimentaire, solutions de gelée la contenant.**

(57) L'invention concerne une composition alimentaire pulvérulente à base de gélatine.

Cette composition est constituée d'un mélange d'une gélatine de qualité alimentaire présentant un Bloom compris entre 80 et 200, d'au moins deux gélifiants choisis parmi les carraghénanes et la farine de graines de caroube, et d'un sel de qualité alimentaire. Elle est apte à former une solution dans l'eau, laquelle après cuisson et refroidissement se fige en une gelée.

Application : glaçage de produits de charcuterie, tels que le pâté de foie demi-lune.

Fig.1a  Fig.1b  Fig.1c  Fig.1d  Fig.1e  Fig.1f

EP 0 230 805 A1

## Composition alimentaire pulvérulente à base de gélatine, de gélifiants et d'un sel de qualité alimentaire, solutions de gelée la contenant.

La présente invention concerne une composition alimentaire pulvérulente à base de gélatine, de gélifiants et d'un sel de qualité alimentaire.

Elle a également pour objet les solutions de gelée contenant ladite composition. Elle concerne encore un procédé de glaçage en cours de cuisson de produits alimentaires tels que le pâté de foie demi-lune, cuits sous atmosphère normale ou cuits sous vide.

Le glaçage de tels produits, ainsi qu'il est traditionnellement pratiqué,est une opération comprenant différentes phases ; sa complexité tient aux caractéristiques de la gelée, couramment utilisée, qui résulte de la coagulation sans adjuvant, d'une gélatine classiquement obtenue par cuisson d'os et de couenne. Un exemple peut être donné avec le pâté de foie dit demi-lune.

La préparation du pâté de foie demi-lune nécessite les phases successives suivantes :
-garnissage d'un moule demi-lune (moule rectangulaire dont la section est un arceau) à l'aide d'une barde,
- versement d'une mêlée de mousse de foie dans le moule, -cuisson,
-démoulage du pâté,
-versement de gelée fondue dans le fond du moule préalablement lavé,
-mise en place du pâté dans le moule sur la gelée,
-prise en masse de la gelée, le moule étant placé dans une enceinte réfrigérée,
-démoulage du pâté.

Une telle préparation présente plusieurs inconvénients :
-elle est peu adaptée à une fabrication en série, que celle-ci soit industrielle ou artisanale, en raison des manipulations qu'elle exige,
-la gélatine conservée sous forme de poudre peut,après réhydratation, être l'objet d'un développement microbien abondant et fait obstacle à une conservation prolongée avant consommation.

La présente invention permet précisément de pallier les inconvénients des produits de l'art antérieur et fait bénéficier les industriels de possibilités et de performances d'utilisation nouvelles.

On a en effet trouvé que l'on pouvait glacer les produits alimentaires en utilisant une composition alimentaire pulvérulente à base de gélatine et d'au moins deux gélifiants choisis parmi les carraghénanes et la farine de graines de caroube.

Ainsi, la présente invention a pour objet une composition alimentaire pulvérulente apte à former une solution dans l'eau, laquelle après cuisson et refroidissement est susceptible de se prendre en masse. Cette composition est utilisable notamment pour le glaçage en cours de cuisson de produits alimentaires tels que le pâté de foie demi-lune. Cette composition est constituée d'un mélange contenant de la gélatine, au moins deux gélifiants choisis parmi les carraghénanes et la farine de graines de caroube et un sel alimentaire.

Elle concerne également les solutions aqueuses de la composition alimentaire pulvérulente ci-dessus.

Enfin, la présente invention concerne un procédé de glaçage en cours de cuisson de produits alimentaires caractérisé en ce qu'une solution aqueuse de ladite composition est utilisée.

La gélatine doit être de la catégorie G telle que la définit le Code des usages en charcuterie, être chaulée et présenter un Bloom compris entre 80 et 200,de préférence égal à 100.

Les proportions relatives de la gélatine peuvent varier dans une large mesure selon la valeur du Bloom :
-lorsque le Bloom est voisin de 100, il convient de préparer une composition comportant, en pourcentage par rapport à son poids final, de 60 à 80 % de gélatine,
-lorsque le Bloom est voisin de 200, il convient de préparer une composition comportant, en pourcentage par rapport à son poids final, de 40 à 50 % de gélatine.

Les gélifiants sont choisis parmi les carraghénanes et la farine de graines de caroube. Leurs proportions relatives peuvent varier par rapport au poids final de la composition :
-de 0,9 à 4,5 % pour le carraghénane et
-de 0,1 à 0,5 % pour la farine de graines de caroube.

De plus, il faut noter que les gélifiants et leurs proportions doivent être choisis de manière que :
-par mélange avec de la gélatine, on obtienne une composition pulvérulente,
-ladite composition pulvérulente forme dans l'eau une solution qui après cuisson et refroidissement se fige en une gelée,
-la gelée obtenue présente une viscosité lui conférant une très bonne capacité d'adhérence au produit soumis au glaçage.

Enfin, il importe que ladite solution selon l'invention résiste à la température généralement utilisée dans les fours de cuisson des produits alimentaires.

Le sel permet de potentialiser l'action des gélifiants et facilite la solubilisation de la gélatine. Un sel préféré est le chlorure de sodium qui intervient également en tant qu'agent de sapidité. Les proportions relatives du sel peuvent varier dans une large mesure par rapport au poids final de la conposition : on utilise d'autant plus de sel que la gélatine présente un Bloom élevé.

A titre d'exemples, on indiquera que la quantité de sel peut varier, entre 19 et 35 % en poids, par rapport au poids total de la composition lorsque la gélatine présente un Bloom de 100 et, entre 49 et 55 % lorsque la gélatine présente un Bloom de 200.

Néanmoins, lorsque le sel est aussi un agent de sapidité, on remplace avantageusement une partie de la quantité de sel par une quantité égale d'une substance alimentaire capable de permettre, lors de la préparation de la solution de gelée, une séparation physique des molécules de gélatine les unes par rapport aux autres, et susceptible de faciliter par conséquent la mise en solution desdites molécules. Dans ce cas, on utilise le sel seulement en quantité suffisante pour lui permettre de jouer son rôle à l'égard des gélifiants.

Les proportions relatives de la substance alimentaire à mettre en oeuvre dans ce cas varient également en fonction de la qualité de la gélatine utilisée.

C'est ainsi que l'on utilise de préférence ladite substance alimentaire dans les proportions indiquées ci-après, par rapport au poids final de la composition :

-en présence de gélatine présentant un Bloom voisin de 100 de 1 à 15 % de ladite substance, et

-en présence de gélatine présentant un Bloom voisin de 200 de 35 à 50 % de ladite substance.

Une substance alimentaire préférée est le lactose.

Il convient de noter que l'utilisation d'une gélatine dont le Bloom est voisin de 100 permet l'obtention d'une composition puis d'une solution de gelée dont la teneur en lactose est à une valeur telle que les réactions de Maillard intervenant entre ledit lactose et les protéines du produit à glacer resteront suffisamment limitées pour ne pas conférer à la gelée une teinte foncée. Une telle gélatine est donc préférée lorsque l'on souhaite obtenir une gelée claire.

En plus des composants et des deux gélifiants précités peuvent être éventuellement ajoutés dans la composition alimentaire pulvérulente de l'invention :

-un renforçateur de goût tel que le L-glutamate monosodique,

-un ou plusieurs colorants et/ou arômes de qualité alimentaire.

Il appartiendra à l'homme de l'art d'ajuster par des essais de routine les proportions relatives des constituants de la composition selon l'invention.

On donnera cependant à titre d'exemples non limitatifs deux compositions spécifiques selon l'invention, les pourcentages étant donnés en poids de chaque composant par rapport au poids total de la composition.

Composition A

- gélatine catégorie G chaulée 100 Bloom          75 %

- mélange de gélifiants :                          3 %

soit {

    - carraghénane                    2,7 %

    - farine de graines de caroube    0,3 %

- chlorure de sodium                              12 %

- lactose                                         10 %

·Composition B

| | |
|---|---|
| – gélatine catégorie G chaulée 200 Bloom | 45 % |
| – mélange de gélifiants : | 3 % |

soit
- carraghénane      2,7 %
- farine de graines de caroube      0,3 %

| | |
|---|---|
| – chlorure de sodium | 12 % |
| – lactose | 40 % |

Les compositions selon l'invention peuvent être conservées pendant environ 6 mois à température ambiante et au sec.

La composition selon l'invention est obtenue par mélange des différents constituants. On peut avantageusement utiliser le mode opératoire qui comprend les étapes ci-après :

1) Fixation des gélifiants (des arômes, des colorants et des renforçateurs de goût éventuels) sur le sel.

Un premier prémélange de consistance pâteuse est obtenu (prémélange N° 1).

2) Incorporation,par mélange de la moitié de la gélatine devant être utilisée, au prémélange N° 1. Un second prémélange est obtenu (prémélange N° 2).

3) Incorporation,par mélange du reste de la gélatine et du lactose éventuel, au prémélange N° 2.

Le produit obtenu est correctement homogénéisé. Il se présente sous la forme d'une poudre.

Il doit être noté que le mode opératoire ci-dessus permet une bonne répartition de tous les constituants, des arômes et des colorants. De plus, l'addition de lactose telle qu'indiquée dispense d'une étape ultérieure de séchage.

Ce mode opératoire implique la mise en oeuvre d'un mélangeur approprié, équipé de façon que le taux d'humidité soit contrôlé.

La composition alimentaire pulvérulente (ci-après désignée par le terme poudre) ainsi obtenue, qui peut constituer en tant que telle un produit industriel offert à la vente, doit être transformée en une solution de gelée susceptible de se prendre en masse. .

Le procédé de préparation de ladite solution requiert deux étapes principales : la réhydratation de la poudre et la cuisson de la poudre réhydratée. On utilise avantageusement une cuve de cuisson en acier inoxydable de qualité alimentaire qui, lorsqu'il s'agit d'une cuve de capacité importante, est de préférence munie d'une double enveloppe à circulation de liquide pour le chauffage de la cuve et équipée d'un système d'agitation.

De préférence, on introduit tout d'abord la quantité d'eau nécessaire que l'on maintient avantageusement à 100°C ; cette température est utile pour une bonne mise en solution des constituants de la poudre. La poudre en quantité nécessaire pour la production envisagée est versée en pluie sur l'eau soumise à une agitation lente jusqu'à obtention d'une solution homogène.

La quantité de poudre à utiliser peut être de 20 à 40 g pour 100 ml d'eau. Il appartiendra à l'homme de l'art de la déterminer par des essais de routine, la valeur à retenir devant permettre d'éviter qu'il n'y ait interpénétration de la solution de gelée et du produit à glacer.

Le déplacement de la solution de gelé tel qu'explicité dans l'exemple N°2 ci-après ne serait pas observé avec une solution préparée avec 10 g de poudre pour 100 ml -la solution en effet pénétrerait dans le produit à glacer -ni avec une solution préparée avec 50 g de poudre pour 100 ml -la solution resterait en effet sur place sans pénétrer cependant dans le produit à glacer.

La solution homogène ainsi obtenue doit encore être soumise à une cuisson d'environ 5 min à une température généralement supérieure ou égale à 95°C car les gélifiants les plus couramment utilisés ne sont solubles qu'à partir d'une telle température.

La solution est ensuite refroidie à environ 60° C qui est sa température d'utilisation. Une pareille température permet en effet de maintenir la gelée à l'état liquide et évite, lorsque ladite solution est versée sur le produit à glacer, que ne fonde le gras de celui-ci qui viendrait se mélanger à la solution. A cet effet, après cuisson, la solution est avantageusement transférée dans un matériel tel qu'une tempéreuse à chocolat qui permet le refroidissement de la solution et son maintien à 60°C.

Les solutions de gelée selon l'invention sont particulièrement bien adaptées au glaçage en cours de cuisson de produits tels que le pâté de foie demi-lune, cuits sous atmosphère normale ou cuits sous vide.

0 230 805

L'invention apporte audit glaçage en cours de cuisson les avantages suivants par rapport à l'art antérieur :
-une sensible simplification puisqu'un seul moule est utilisé sans qu'il ne soit nécessaire de pratiquer un quelconque démoulage intermédiaire,
-une pasteurisation de la gelée au cours de la cuisson (dans l'exemple ci-après de 3 h à 90°C) du produit soumis au glaçage, qui autorise un allongement des délais de conservation.

De plus, l'invention permet de procéder à un glaçage en cours de cuisson des produits cuits sous vide.

L'invention va être maintenant illustrée par des exemples qui ne limitent en rien sa portée. Les pourcentages indiqués sont donnés en poids du composant concerné par rapport au poids total de la composition mise en oeuvre. Les gélifiants sont désignés par leurs dénominations couramment utilisés et définies dans des textes réglementant les produits alimentaires.

Exemple 1

Préparation d'une solution de gelée en vue du glaçage en cours de cuisson d'un pâté de foie demi-lune.

1.1. Préparation de la poudre

Elle est effectuée à la température ambiante des locaux de fabrication.

a) Fixation sur le chlorure de sodium des gélifiants, de l'arôme, du colorant et du renforçateur de goût

```
On verse sur le chlorure de sodium (: 12 %)
    - les gélifiants :
      E 407 (carraghénane)         2,7 % ⎫
                                          ⎬ soit 3 %
      E 410 (farine de graines de caroube) 0,3 % ⎭

    - l'arôme (arôme de porc),
    - le colorant (E 250 : caramel),
    - le renforçateur de goût (L-glutamate monosodique),
```

b) Incorporation de la moitié de la gélatine

Au prémélange obtenu en a) on ajoute:
. 37,5 % de gélatine de catégorie G chaulée de 100 Bloom
Le produit obtenu est correctement homogénéisé.

c) Incorporation du reste de la gélatine et du lactose

Au prémélange obtenu en b) on ajoute :
. 37,5 % de gélatine de catégorie G chaulée présentant un Bloom égal à 100,
. 10 % de lactose

5

Le produit obtenu est correctement homogénéisé : il se présente sous la forme d'une poudre et possède un pourcentage d'humidité d'environ 12 %.

1.2. Préparation de la solution de gelée

a) Réhydratation de la poudre

Dans une cuve de cuisson sont versés 5 litres d'eau portée et maintenue à 100°C.
1000 g de la poudre obtenue en 2.1. sont versés sur l'eau soumise à une agitation lente.
L'agitation est maintenue jusqu'à obtention d'une solution homogène.

b) Cuisson de la solution

La solution obtenue en a) est soumise à 95°C pendant 5 min.

c) Refroidissement de la solution

La solution obtenue en b) est soutirée par le bas de la cuve et transférée dans une tempéreuse à chocolat réglée de façon à permettre son refroidissement et son maintien à 60°C.
La solution obtenue préparée avec 20 g de poudre pour 100 ml convient tout particulièrement au glaçage en cours de cuisson du pâté de foie demi-lune.

Exemple 2

Glaçage en cours de cuisson d'un pâté de foie demi-lune

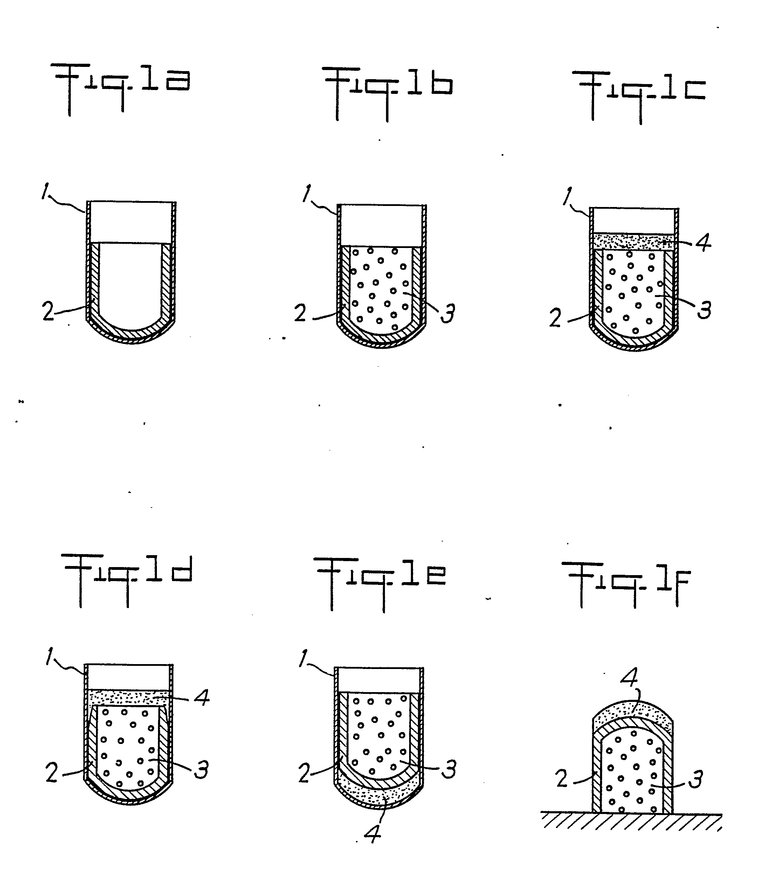

Les différentes phases de ce glaçage sont représentées sur les figures 1a à 1f annexées.
Pour effectuer ce glaçage, on prend un moule demi-lune (1) et on en recouvre les parois intérieures d'une barde (2) (figure 1a).
On verse dans le moule une mêlée de mousse de foie (3) (figure 1b). On verse sur la mêlée une solution de gelée (4) telle qu'obtenue selon l'exemple 1 (figure 1c).
On cuit à sec pendant 10 à 45 min à 100°C : la solution de gelée commence à descendre vers le fond du moule (figure 1d).
On cuit en atmosphère humide à 85°C pendant 2 h 30 min : la solution de gelée poursuit sa descente vers le fond du moule.
On refroidit le pâté aux environs de 10°C : la solution de gelée qui occupe à présent tout le fond du moule se prend en masse (figure 1e).
Le pâté de foie peut être alors démoulé et servi tel quel, la gelée recouvrant sa partie supérieure (figure 1f). Il peut également être conditionné sous vide si sa consommation doit être différée.

**Revendications**

1. Composition alimentaire pulvérulente à base de gélatine, de gélifiants et d'un sel, apte à former une solution dans l'eau, laquelle après cuisson et refroidissement se fige en une gelée, caractérisée en ce qu'elle est constituée d'un mélange d'une gélatine de qualité alimentaire présentant un Bloom compris entre 80 et 200, d'au moins deux gélifiants choisis parmi les carraghénanes et la farine de graines de caroube, et d'un sel de qualité alimentaire.

2. Composition selon la revendication 1, caractérisée en ce qu'elle contient en outre un ou plusieurs arômes alimentaires et/ou un ou plusieurs colorants alimentaires et/ou un renforçateur de goût.

3. Composition selon l'une quelconque des revendications 1 et 2, caractérisée en ce que la gélatine présente un Bloom voisin de 100.

4. Composition selon la revendication 3, caractérisée en ce qu'elle contient en pourcentages par rapport à son poids 60 à 80 % de gélatine, 19 à 35% de sel alimentaire, 09, à 4,5 % de carraghénane et 0,1 à 0,5 % de farine de graines de caroube.

5. Composition selon la revendication 4, caractérisée en ce qu'une partie du sel est remplacée par une quantité égale d'une substance alimentaire susceptible de faciliter la dissolution de la gélatine, ladite quantité représentant 1 à 15 % en poids par rapport au poids final de la composition.

6. Composition selon l'une quelconque des revendications 1 et 2, caractérisée en ce que la gélatine présente un Bloom voisin de 200.

7. Composition selon la revendication 6, caractérisée en ce qu'elle contient en pourcentage par rapport à son poids 40 à 50 % de gélatine, 49 à 55 % d'un sel alimentaire, 0,9 à 4,5 % de carraghénane et 0,1 à 0,5 % de farine de graines de caroube.

8. Composition selon la revendication 7, caractérisée en ce qu'une partie du sel est remplacée par une quantité égale d'une substance alimentaire susceptible de faciliter la dissolution de la gélatine, ladite quantité représentant 35 à 50 % en poids par rapport au poids final de la composition.

9. Composition selon l'une des revendications 5 ou 8, caractérisée en ce que la substance alimentaire est du lactose.

10. Composition selon l'une des revendications 4, 5 ou 9, caractérisée en ce qu'elle contient en pourcentages par rapport à son poids final 75 % de gélatine, 12 % de chlorure de sodium, 2,7 % de carraghénane, 0,3 % de farine de graines de caroube et 10 % de lactose.

11. Composition selon l'une des revendications 7, 8 ou 9 caractérisee en ce qu'elle contient en pourcentages par rapport son poids 45 % de gélatine, 12 % de chlorure de sodium, 2,7 % de carraghénane, 0,3 % de farine de graines de caroube et 40 % de lactose.

12. Procédé selon l'une quelconque des revendications 1 à 11, caracterisée en ce qu'il consiste: 1) à fixer sur le sel les gélifiants et éventuellement les arômes alimentaires et/ou les colorants alimentaires et/ou le renforçateur de goût pour former un premier prémélange; 2) à incorporer la moitié de la gélatine au prémélange obtenu et à incorporer ensuite le reste de la gélatine et éventuellement la substance alimentaire susceptible de faciliter la dissolution de la gélatine.

13. Solution de gelée résultant de la cuisson d'une solution aqueuse contenant de 20 à 40 g pour 100 ml d'une composition selon l'une quelconque des revendications 1 à 11.

14. Procédé de glaçage en cours de cuisson d'un produit alimentaire cuit sous atmosphère normale ou cuit sous vide, tel qu'un pâté de foie demi-lune, caractérisé en ce qu'on met en oeuvre une solution de gelée selon la revendication 13.

Fig.1a  Fig.1b  Fig.1c

Fig.1d  Fig.1e  Fig.1f

# RAPPORT DE RECHERCHE EUROPEENNE

**Office européen des brevets**

Numero de la demande

EP 86 40 2665

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| A | PATENTS ABSTRACTS OF JAPAN, vol. 5, no. 4 (C-38)[676], 13 janvier 1981; & JP-A-55 131 365 (YUKIJIRUSHI SHIYOKUHIN KOGYO K.K.) 13-10-1980 * Résumé * | 1,2 | A 23 L 1/04 A 23 L 1/317 |
| A | US-A-3 669 688 (H. THOMPSON) * Revendications 1-3; exemple 1; colonne 2, lignes 2-51 * | 1,2,6 | |
| A | US-A-4 272 557 (B. NAPPEN) * Revendication 1; exemples I,II * | 1,2 | |
| A | US-A-4 197 325 (HOKOTO ONO) * Exemple 2 * | 1,2 | **DOMAINES TECHNIQUES RECHERCHES (Int. Cl. 4)** |
| A | DEUTSCHE MOLKEREI ZEITUNG, vol. 98, no. 20, 1977, pages 635-636,640-645, Munich, DE; H. OTTENBACHER: "Speisegelatine in der Milchwirtschaft" * Page 643, colonne 2 * | 1,2 | A 23 L A 23 P A 23 J |
| A | FR-A- 471 811 (P. VENAIL) * Page 3, colonne 2 * | 1 | |
| | --- -/- | | |

Le présent rapport de recherche a été établi pour toutes les revendications

| Lieu de la recherche | Date d'achèvement de la recherche | Examinateur |
|---|---|---|
| LA HAYE | 10-03-1987 | DESMEDT G.R.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 443 213  (PB GELATINES) <br> * Page 1, lignes 8-16; page 4, lignes 1-5 * | 1,2 | |
| A | CH-A- 650 129  (MEYHALL CHEMICAL AG) | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 10-03-1987 | DESMEDT G.R.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82